# EUROPEAN PATENT APPLICATION

(11) **EP 4 135 483 A1**
(43) Date of publication of application: **15.02.2023**
(21) Application number: 21191173.0
(22) Date of filing: 13.08.2021
(51) Int. Cl.: H05B 47/18, H02H 9/00

(54) **OVERVOLTAGE-PROTECTED CURRENT LIMITER FOR A POWER SUPPLY OF A LIGHTING CONTROL BUS**

(71) Applicant: Tridonic GmbH & Co. KG, 6851 Dornbirn (AT)
(72) Inventor: Schertler, Markus, 6850 Dornbirn (AT); Diez, Nikolaus, 6850 Dornbirn (AT)
(74) Representative: Rupp, Christian

(57) **Abstract**

Disclosed is a current limiter (1) for a power supply (2) of a lighting control bus (6). The current limiter (1) comprises a first switch (12) arranged serially in a current path of the lighting control bus (6). The first switch (12) is configured to gate a current (I) of the lighting control bus (6) in accordance with a voltage (V) of the lighting control bus (6) applied to a control terminal of the first switch (12). The current limiter (1) further comprises a voltage divider (15, 16) connected in parallel to the current path. The current limiter (1) further comprises a second switch (17) interposed between the control terminal of the first switch (12) and an outer terminal of the voltage divider (15, 16). The second switch (17) is configured to shunt the voltage applied to the control terminal of the first switch (12) in accordance with a current (I_{B}) into the control terminal of the second switch (17). The current limiter (1) further comprises a Zener diode (18) interposed between the control terminal of the second switch (17) and an inner terminal of the voltage divider (15; 16). The Zener diode (18) is configured to gate the current (I_{B}) into the control terminal of the second switch (17) in accordance with a voltage drop between the inner terminal and the outer terminal of the voltage divider (15, 16) in excess of a reverse breakdown voltage of the Zener diode (18). This achieves an overvoltage protection of the first switch (12) and the current limiter (1).

## Description

### Technical Field

The present disclosure generally relates to lighting technology, and in particular to a current limiter for a power supply of a lighting control bus, a power supply comprising the current limiter, and a driver for at least one LED comprising the power supply.

### Background Art

Lighting control buses according to the Digital Addressable Lighting Interface (DALI) specifications use a single pair of wires for both communication and powering. Signals are sent by briefly shorting the bus to a low voltage level, wherein power supplies of the lighting control bus are required to tolerate this, limiting the current to 250 mA by means of a current limiter circuit.

For a prompt response to a shorting of the bus, such current limiter circuits are typically arranged between the lighting control bus and the power supply for the same, and comprise an analog circuit including a reference diode for low temperature drift and a Field Effect Transistor (FET) for limitation of the flow of current on the lighting control bus if any of the gears (e.g., drivers, sensors, controls) attached to the lighting control bus communicate.

Stacking, i.e. parallel connection, of power supplies for a lighting control bus, such as specified by the Digital Illumination Interface Alliance (DiiA) in connection with its D4i certification, introduces the possibility of mutually reverse polarity when multiple power supplies are connected to the lighting control bus.

In such case, the aforementioned FET of the current limiter may be subject to an excess DC voltage, which may ultimately destroy the FET.

### Summary

In view of the above-mentioned drawbacks and limitations, the present disclosure aims to improve the current limiter of the background art. An objective is to provide an overvoltage-protected current limiter.

The objective is achieved by the embodiments as defined by the appended independent claims. Preferred embodiments are set forth in the dependent claims and in the following description and drawings.

A first aspect of the present disclosure relates to a current limiter for a power supply of a lighting control bus. The current limiter comprises a first switch arranged serially in a current path of the lighting control bus. The first switch is configured to gate a current of the lighting control bus in accordance with a voltage of the lighting control bus applied to a control terminal of the first switch. The current limiter further comprises a voltage divider connected in parallel to the current path. The current limiter further comprises a second switch interposed between the control terminal of the first switch and an outer terminal of the voltage divider. The second switch is configured to shunt the voltage applied to the control terminal of the first switch in accordance with a current into the control terminal of the second switch. The current limiter further comprises a Zener diode interposed between the control terminal of the second switch and an inner terminal of the voltage divider. The Zener diode is configured to gate the current into the control terminal of the second switch in accordance with a voltage drop between the inner terminal and the outer terminal of the voltage divider in excess of a reverse breakdown voltage of the Zener diode.

The control terminal of the first switch may be connected to a high-side rail of the lighting control bus; and the first switch may be interposed in a low-side rail of the lighting control bus.

The lighting control bus may comprise a DALI bus.

The first switch may comprise a Field Effect Transistor, FET.

The second switch may comprise an NPN Bipolar Junction Transistor, BJT.

The Zener diode and an emitter diode of the second switch may be oppositely directed.

The Zener diode may be designed for the reverse breakdown voltage of at least 9 V.

A second aspect of the present disclosure relates to a power supply of a lighting control bus. The power supply comprises an interface DC/DC converter configured to supply the lighting control bus off an externally provided logic supply DC voltage; and a current limiter of the first aspect or any of its implementations interposed between the interface DC/DC converter and the lighting control bus.

The power supply may further comprise an interface control circuit configured to operate the interface DC/DC converter.

The interface DC/DC converter may comprise a galvanic isolation.

The interface DC/DC converter may comprise a Flyback converter or a resonant converter.

A third aspect of the present disclosure relates to a driver for at least one LED. The driver comprises a power factor correction, PFC, AC/DC converter configured to supply a DC bus off an AC mains supply; a first DC/DC converter configured to supply the at least one LED off the DC bus; a second DC/DC converter configured to provide a logic supply DC voltage off the DC bus; and a power supply of the second aspect or any of its implementations configured to supply a lighting control bus connectable to the driver off the logic supply DC voltage provided by the second DC/DC converter.

The driver may further comprise a communications interface entity configured to communicate via the lighting control bus; and a driver control entity configured to operate the first DC/DC converter in accordance with lighting control instructions receivable by the communications interface entity.

A fourth aspect of the present disclosure relates to a lighting control system. The lighting control system comprises a driver of the third aspect or any of its implementations for at least one LED. The driver is connected to a lighting control bus and configured to drive the at least one LED in accordance with a lighting control instruction receivable via the lighting control bus. The lighting control system further comprises at least one bus participant connected to the lighting control bus and configured to issue the lighting control instruction for the driver via the lighting control bus.

### Advantageous Effects

The present disclosure provides an overvoltage-protected current limiter for a power supply of a lighting control bus, in particular a DALI bus, in which a first FET-type switch for overcurrent protection is overvoltage-protected by a second BJT-type switch. The second switch becomes conducting (closed, on, switched through) when an excess DC voltage on the lighting control bus triggers a reverse breakdown of a reverse-biased Zener diode connected to the control terminal of the second switch. This shunts (shorts, short-circuits, hot-wires) the voltage applied to the control terminal of the first switch, which is derived from a high-side rail of the lighting control bus, to a low-side rail of the same, so that the first switch becomes non-conducting (open, off). This way, the first FET-type switch is switched off / protected by the second BJT-type transistor.

The protection is generally against overheat / overload, not only against wrong polarity of power supplies.

The overvoltage-protected current limiter may give rise to less customer complains (when power supplies are wrongly installed).

The protection is a temperature-stable function despite the deployment of a low-cost BJT transistor.

The technical effects and advantages described above in relation with the current limiter equally apply to the power supply comprising the current limiter, and to the driver comprising the power supply.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
FIG. 1 illustrates a driver including a power supply including a current limiter, all in accordance with the present disclosure; and
FIG. 2 illustrates the current limiter of FIG. 1 in more detail.

### Detailed Descriptions of Drawings

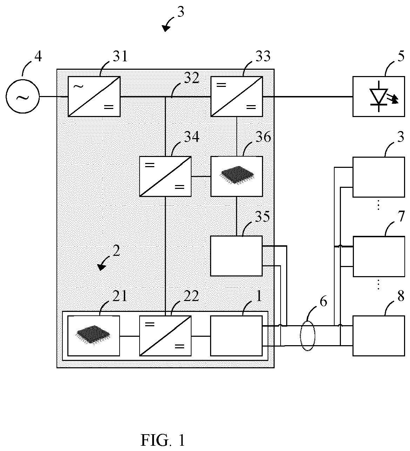

FIG. 1 illustrates a driver 3 including a power supply 2 including a current limiter 1, all in accordance with the present disclosure.

The driver 3 for at least one LED 5 comprises a PFC AC/DC converter 31 configured to supply a - schematically illustrated - dual rail DC bus 32 off an AC mains supply 4; a first DC/DC converter 33 configured to supply a load supply DC voltage, such as 400V, the at least one LED 5 off the DC bus 32; a second DC/DC converter 34 configured to provide a logic supply DC voltage, such as 12V, off the DC bus 32; and a power supply 2 of the second aspect or any of its implementations. The power supply 2 is configured to supply a lighting control bus 6, such as a DALI bus, connectable to the driver 3 off the logic supply DC voltage provided by the second DC/DC converter 34.

The driver 3 may further comprise a communications interface entity 35, such as a DALI communications interface, configured to communicate bidirectionally via the lighting control bus 6; and a driver control entity 36, such as a microcontroller, configured to operate the first DC/DC converter 33 in accordance with lighting control instructions receivable by the communications interface entity 35. For example, the driver control entity 36 may be configured to dim the at least one LED 5 in accordance with such lighting control instructions received from one or more sensors 7 or one or more controls 8, such as Serial DIMmer communications (S-DIM) controls or DALI controls.

Besides the driver 3 described above, similar drivers 3 may be connected to the same lighting control bus 6.

The driver 3 connected to the lighting control bus 6 may form a part of a lighting control system, whereas at least one bus participant, e.g. sensor 7 and / or controls 8, is connected to the lighting control bus 6 and configured to issue the lighting control instructions for the driver 3 via the lighting control bus 6.

The power supply 2 comprises a interface DC/DC converter 22 configured to supply the lighting control bus 6 off an externally provided logic supply DC voltage, such as the logic supply DC voltage provided by the second DC/DC converter 34 of the driver 3; and a current limiter 1 of the first aspect or any of its implementations interposed between the interface DC/DC converter 22 and the lighting control bus 6.

The power supply 2 may further comprise an interface control circuit 21, such as an integrated circuit (IC), configured to operate the interface DC/DC converter 22.

The driver control entity 36 and the interface control circuit 21 may be combined as one joint control entity, e.g. as one integrated circuit, performing both functions.

The interface DC/DC converter 22 may comprise a galvanic isolation, and particularly comprise a Flyback converter or a resonant converter.

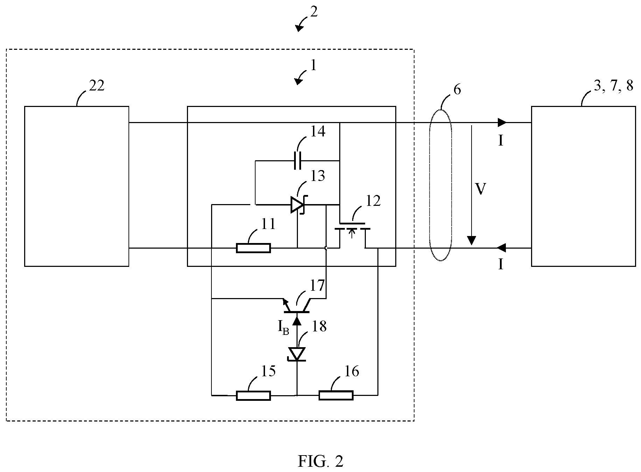

FIG. 2 illustrates the current limiter 1 of FIG. 1 in more detail.

The current limiter 1 comprises a first switch 12 arranged in a current path of the lighting control bus 6. The first switch 12 may comprise a FET. The control terminal of the first switch 12 may be connected to a high-side rail of the lighting control bus 6; and the first switch 12 may be interposed in a low-side rail of the lighting control bus 6.

The first switch 12 is configured to gate a current I of the lighting control bus 6 in accordance with a voltage V of the lighting control bus 6 applied to a control terminal of the first switch 12. This may also refer to a fraction of said voltage V, as may be derived from the voltage V by means of a voltage drop across one or more resistors (not shown) provided at the control terminal of the switch 12.

As used herein, to "gate" may refer to controlling a passage or pass-through (of a current/voltage) with a gate, in dependence of some other parameter.

As used herein, a high-side rail may refer to a particular one of a pair of electrical connections between a power supply (such as the power supply 2) and a load (such as the sensors 7 or controls 8 connected to the lighting control bus 6) having a higher electrical potential of the pair, and a low-side rail may refer to the other one of the pair having a lower electrical potential of the pair.

The current limiter 1 may further comprise a resistor 11 arranged in series with the first switch 12. The resistor 11 may be configured to sense the current I gated by the first switch 12 as a voltage drop across the resistor 11.

The current limiter 1 may further comprise a reference diode 13, such as a TL431 adjustable shunt regulator circuit. In simple terms, the reference diode 13 is configured to act as a temperature-compensated variable/adjustable Zener diode. A control terminal of the reference diode 13 may be connected to a common terminal of the resistor 11 and the first switch 12; and the reference diode 13 may be interposed between another terminal of the resistor 11 and the control terminal of the switch 12. The current limiter 1 is configured to shunt the voltage V applied to the control terminal of the switch 12 in accordance with the voltage drop across the resistor 11.

As a result, the current I is limited by the current limiter 1 if any of the gears (i.e., sensors 7, controls 8 or drivers 3) connected to the lighting control bus 6 communicate by briefly shorting the high-side and low side rails of the lighting control bus 6 to a low voltage level.

The current limiter 1 may further comprise a capacitor 14 connected in parallel to the reference diode 13 for softening a switching behaviour of the first switch 12.

Especially if multiple drivers 3 comprising respective power supplies 2 are connected to the lighting control bus 6, there may be a possibility of mutually reverse polarity. In such case, the first switch 12 of the current limiter 1 may be subject to an excess DC voltage as follows:
The power supply 2 of one driver 3 may regulate the bus supply voltage to a value of 15 V, for example. If a power supply 2 of a another driver 3 is connected to the lighting control bus 6 with reverse polarity of 15 V, a total of almost 30 V must drop across the first switch 12 (and the resistor 1 in series). As a result, the second switch 12 may ultimately be destroyed.

An overvoltage protection (including a protection against wrong polarity) of the current limiter 1 may be achieved as follows.

The current limiter 1 further comprises a voltage divider 15, 16 connected in parallel to the current path.

The current limiter 1 further comprises a second switch 17 interposed between the control terminal of the first switch 12 and an outer terminal of the voltage divider 15, 16. The second switch 17 may comprise an NPN BJT. The second switch 17 is configured to shunt the voltage applied to the control terminal of the first switch 12 in accordance with a current I_{B} into the control terminal of the second switch 17. The current limiter 1 further comprises a Zener diode 18 interposed between the control terminal of the second switch 17 and an inner terminal of the voltage divider 15, 16. The Zener diode 18 is configured to gate the current I_{B} into the control terminal of the second switch 17 in accordance with a voltage drop between the inner terminal and the outer terminal of the voltage divider 15, 16 in excess of a reverse breakdown voltage of the Zener diode 18.

In other words, a voltage drop across the resistor 15 of the voltage divider 15, 16 in excess of the reverse breakdown voltage of the reverse-biased Zener diode 18 connected to the control terminal of the second switch 17 triggers a reverse breakdown of the Zener diode 18. The Zener diode 18 may be designed for the reverse breakdown voltage of at least 9 V.

In response to the reverse breakdown of the Zener diode 18, the current I_{B} into the control terminal of the second switch 17 increases sharply, so that the second switch 17 becomes conducting (closed, on, switched through) and shunts (shorts, short-circuits, hot-wires) the voltage applied to the control terminal of the first switch, which is derived from a high-side rail of the lighting control bus, to a low-side rail of the same, so that the first switch becomes non-conducting (open, off). This way, the first FET-type switch 12 is protected by the second BJT-type transistor 17.

The Zener diode 18 and an emitter diode of the second switch 17 may be oppositely directed. In such case, a temperature coefficient (TC) of the Zener diode 18 compensates for a TC of the BJT base-emitter junction. Thereby, the overvoltage protection is a temperature-stable function despite the deployment of the low-cost BJT 17.

## Claims

1. A current limiter (1) for a power supply (2) of a lighting control bus (6), the current limiter (1) comprising
a first switch (12) arranged in a current path of the lighting control bus (6); the first switch (12) configured to gate a current (I) of the lighting control bus (6) in accordance with a voltage (V) of the lighting control bus (6) applied to a control terminal of the first switch (12);
a voltage divider (15, 16) connected in parallel to the current path;
a second switch (17) interposed between the control terminal of the first switch (12) and an outer terminal of the voltage divider (15, 16), the second switch (17) configured to shunt the voltage applied to the control terminal of the first switch (12) in accordance with a current (I_{B}) into the control terminal of the second switch (17); and
a Zener diode (18) interposed between the control terminal of the second switch (17) and an inner terminal of the voltage divider (15; 16), the Zener diode (18) configured to gate the current (I_{B}) into the control terminal of the second switch (17) in accordance with a voltage drop between the inner terminal and the outer terminal of the voltage divider (15, 16) in excess of a reverse breakdown voltage of the Zener diode (18).

2. The current limiter (1) of claim 1,
the control terminal of the first switch (12) connected to a high-side rail of the lighting control bus (6); and
the first switch (12) interposed in a low-side rail of the lighting control bus (6).

3. The current limiter (1) of any one of the preceding claims,
the lighting control bus (6) comprising a DALI bus.

4. The current limiter (1) of any one of the preceding claims,
the first switch (12) comprising a FET.

5. The current limiter (1) of any one of the preceding claims,
the second switch (17) comprising an NPN BJT.

6. The current limiter (1) of claim 5,
the Zener diode (18) and an emitter diode of the second switch (17) being oppositely directed.

7. The current limiter (1) of any one of the preceding claims,
the Zener diode (18) being designed for the reverse breakdown voltage of at least 9 V.

8. A power supply (2) of a lighting control bus (6), the power supply (2) comprising
an interface DC/DC converter (22) configured to supply the lighting control bus (6) off an externally provided logic supply DC voltage; and
a current limiter (1) of any one of the preceding claims interposed between the interface DC/DC converter (22) and the lighting control bus (6).

9. The power supply (2) of claim 8, further comprising
an interface control circuit (21) configured to operate the interface DC/DC converter (22).

10. The power supply (2) of claim 8 or claim 9,
the interface DC/DC converter (22) comprising a galvanic isolation.

11. The power supply (2) of claim 10,
the interface DC/DC converter (22) comprising a Flyback converter or a resonant converter.

12. A driver (3) for at least one LED (5), the driver (3) comprising
a power factor correction, PFC, AC/DC converter (31) configured to supply a DC bus (32) off an AC mains supply (4);
a first DC/DC converter (33) configured to supply the at least one LED (5) off the DC bus (32);
a second DC/DC converter (34) configured to provide a logic supply DC voltage off the DC bus (32); and
a power supply (2) of any one of the claims 8 to 11 configured to supply a lighting control bus (6) connectable to the driver (3) off the logic supply DC voltage provided by the second DC/DC converter (34).

13. The driver (3) of claim 12, further comprising
a communications interface entity (35) configured to communicate via the lighting control bus (6); and
a driver control entity (36) configured to operate the first DC/DC converter (33) in accordance with instructions receivable by the communications interface entity (35).

14. A lighting control system, comprising
a driver (3) for at least one LED (5) of claim 12 or claim 13 connected to a lighting control bus (6) and configured to drive the at least one LED (5) in accordance with a lighting control instruction receivable via the lighting control bus (6); and
at least one bus participant (7, 8) connected to the lighting control bus (6) and configured to issue the lighting control instruction for the driver (3) via the lighting control bus (6).
